# EUROPEAN PATENT APPLICATION

(11) **EP 4 682 474 A1**
(43) Date of publication of application: **21.01.2026**
(21) Application number: 25188061.3
(22) Date of filing: 08.07.2025
(51) Int. Cl.: G01D 5/347, G01D 5/244

(54) **MOTOR APPARATUS WITH ENCODERS**

(30) Priority: 16.07.2024 US 202418774620
(71) Applicant: Avago Technologies International Sales Pte. Limited, Singapore 768923 (SG)
(72) Inventor: Wong, Weng Fei, 11900 Bayan Lepas, Penang (MY)
(74) Representative: Grünecker Patent- und Rechtsanwälte PartG mbB

(57) **Abstract**

The subject technology is directed to a motor apparatus or rotary system. In an embodiment, the apparatus includes a housing comprising a first opening positioned on a first side. A motor comprising a shaft is positioned inside the housing. The shaft comprises a first portion extending through the first opening. The apparatus further includes a code wheel and an encoder. The encoder comprises a second opening. The first portion of the shaft extends through the second opening. By extending the shaft through the encoder, the apparatus allows for dual-sided functionality, enabling both ends of the shaft to be used for driving loads or connecting to other components. This configuration enhances space efficiency and the versatility of the motor apparatus, making it ideal for various compact applications.

## Description

### FIELD OF INVENTION

The subject technology is directed to motor apparatus.

### BACKGROUND OF THE INVENTION

Encoders are important components in modem motion control systems, converting mechanical movements into electrical signals that provide feedback on position, speed, and direction. They are used in a wide range of applications, including robotics, industrial automation, medical devices, and consumer electronics. By providing accurate motion feedback, encoders enable precise control and monitoring of mechanical systems.

Over the past decade, the trend toward miniaturization has increased the need for compact and efficient encoders. Miniature motors, used in precision applications such as medical devices, micro-robotics, and small consumer electronics, require feedback systems that fit within limited spaces while maintaining high performance. However, integrating encoders into small-scale systems remains challenging due to their size and structural requirements.

Various approaches for improving the integration of encoders in miniature applications have been explored, but they have proven to be insufficient. It is important to recognize the need for new and improved encoder designs.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a simplified diagram illustrating a motor apparatus having an encoder according to embodiments of the subject technology.
Figure 2 is a simplified diagram illustrating a motor apparatus according to embodiments of the subject technology.
Figure 3 is a simplified diagram illustrating a motor apparatus according to embodiments of the subject technology.
Figure 4 is a simplified diagram illustrating a top view and a cross-sectional view of an encoder according to embodiments of the subject technology.
Figure 5 is a simplified diagram illustrating a top view and a cross-sectional view of an encoder according to embodiments of the subject technology.
Figure 6 is a simplified diagram illustrating a top view and a cross-sectional view of an encoder according to embodiments of the subject technology.
Figure 7 is a simplified diagram illustrating a top view and a cross-sectional view of an encoder according to embodiments of the subject technology.

### DETAILED DESCRIPTION OF THE INVENTION

The subject technology is directed to a motor apparatus and/or rotary system (both terms may be used interchangeably throughout this application). In an embodiment, the apparatus includes a housing comprising a first opening positioned on a first side. A motor comprising a shaft is positioned inside the housing. The shaft comprises a first portion extending through the first opening. The apparatus further includes a code wheel and an encoder. The encoder comprises a second opening. The first portion of the shaft extends through the second opening. By extending the shaft through the encoder, the apparatus allows for dual-sided functionality, enabling both ends of the shaft to be used for driving loads or connecting to other components. This configuration enhances space efficiency and the versatility of the motor apparatus, making it ideal for various compact applications.

An encoder functions as a motion detector that provides closed-loop feedback to a motor control system. For example, a motor encoder (or simply an encoder) is a device attached to a motor that translates the motor's rotation into electrical signals. This feedback is crucial for precise control of motor-driven mechanisms, as it continuously informs the system about the position, speed, acceleration, and direction of the motor shaft. Encoders translate rotary or linear motion into electrical signals, which are processed to provide real-time data on the motor's performance.

Optical encoders are widely used types due to their ability to provide high-resolution feedback. These encoders operate by using a light-emitting diode (LED) as a light source and a photodiode array as a detector. The configuration of these components can be adapted to different design needs, including transmissive, reflective, or imaging configurations. These configurations work in conjunction with a code wheel or code strip, which modulates the light emitted by the light source. As the code wheel or code strip moves, it translates rotary or linear motion into a digital output, which is processed to provide information about the motor's movements.

In transmissive encoders, an LED may serve as the light source, and its light is collimated into a parallel beam by a lens positioned over the LED. The detector, positioned opposite the emitter, may include photodiode arrays and a signal processor. As the code wheel or code strip moves between the emitter and detector, the light beam is interrupted by the pattern of bars and spaces on the code wheel, generating a series of light and dark signals. These signals are detected by the photodiodes and processed to produce digital waveforms that provide information about the motor's position, velocity, and acceleration. The high contrast generated by transmissive encoders makes them suitable for applications requiring high speed and high resolution. However, placing the emitter and detector on opposite sides requires a large design profile, which can result in increased material usage and pose challenges for integrating the system into compact devices.

In reflective encoders, the emitter and detector are placed on the same side of the code wheel. An LED light is focused onto the code wheel by a lens, and the light that reflects back is detected by photodiodes. The alternating light and dark patterns, corresponding to the code wheel's bars and spaces, are processed to generate a digital output. This configuration allows for a low-profile design and reduces material and assembly requirements by positioning both the emitter and detector on the same side. However, the lower contrast between the reflective and non-reflective segments limits the speed and resolution at which reflective encoders can operate.

Imaging encoders use an imaging sensor to capture detailed patterns on the code wheel. An LED light is focused onto the code wheel, and the imaging sensor records the modulated light pattern as the code wheel rotates. This configuration enables high-resolution feedback and the ability to capture complex patterns. Imaging encoders share the low-profile advantage of reflective encoders but are limited by the need for a diffusive code wheel and low diffusive reflectance, which limit their speed and overall operational efficiency in high-speed applications. There are other types of encoders as well, such encoders relying on magnetic force (e.g., Hall effect encoders).

In miniature applications, encoders play an important role in enabling the precise control and monitoring of small electric motors (e.g., 20 mm or smaller in diameter). These miniature motors are highly versatile and are used across a wide range of fields due to their ability to deliver precise and reliable performance in limited spaces. For example, in the medical sector, miniature motors are used to operate devices such as insulin pumps, nebulizers, or surgical instruments, providing the precise movements needed for accurate and reliable performance in medical procedures. In industrial automation, miniature motors are used in conveyor belts, robotic arms, or pick-and-place machines, where their compact size enables precise positioning and movement within automated manufacturing systems.

In various embodiments, the subject technology provides a motor apparatus designed for compact applications. The motor apparatus incorporates a through-hole configuration, allowing the motor shaft to extend through the encoder. This design enables both ends of the shaft to be utilized for driving loads or connecting to other mechanical components, enhancing the versatility and integration options of the motor system. By incorporating the encoder without increasing the motor's overall footprint, the subject technology maximizes space efficiency, making it ideal for applications requiring precise motion feedback in constrained spaces. Such a configuration ensures high precision in motion feedback while maintaining robustness and stability, even in environments with limited space and potential mechanical vibrations.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Similarly, when an element is referred to herein as being "bonded" to another element, it is to be understood that the elements can be directly bonded to the other element (without any intervening elements) or have intervening elements present between the bonded elements. In contrast, when an element is referred to as being "directly bonded" to another element, it should be understood that no intervening elements are present in the "direct" bond between the elements. However, the existence of direct bonding does not exclude other forms of bonding, in which intervening elements may be present.

Likewise, when an element is referred to herein as being a "layer," it is to be understood that the layer can be a single layer or include multiple layers. For example, a conductive layer may comprise multiple different conductive materials or multiple layers of different conductive materials, and a dielectric layer may comprise multiple dielectric materials or multiple layers of dielectric materials. When a layer is described as being coupled or connected to another layer, it is to be understood that the coupled or connected layers may include intervening elements present between the coupled or connected layers. In contrast, when a layer is referred to as being "directly" connected or coupled to another layer, it should be understood that no intervening elements are present between the layers. However, the existence of directly coupled or connected layers does not exclude other connections in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

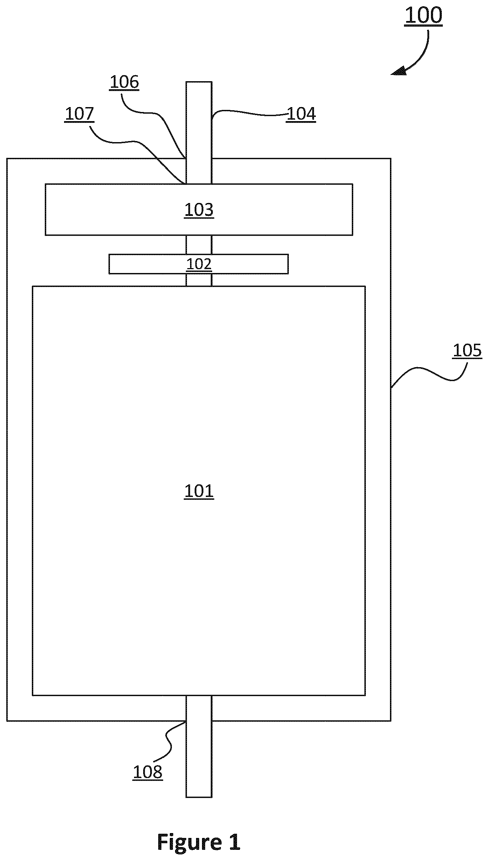

Figure 1 is a simplified diagram illustrating a motor apparatus or rotary system 100 having an encoder according to embodiments of the subject technology. Rotary system can be mechanically or electrically driven. This diagram merely provides an example, which should not unduly limit the scope of the claims. One of ordinary skill in the art would recognize many variations, alternatives, and modifications. For example, the term "motor apparatus" may refer to an assembly that converts electrical energy into mechanical motion and can be used to drive or control various mechanical systems. Similarly, the term "rotary system" may refer to a mechanism designed to produce or control rotational motion, which can be mechanically or electrically driven. These terms may be used interchangeably in the context of the subject technology, encompassing any system that manages rotational dynamics. The motor apparatus can be applied across a range of applications, including robotics, medical devices, and consumer electronics. This may include, but is not limited to, systems that provide rotational or linear motion using electric motors of various sizes and types.

As shown, motor apparatus 100 includes housing 105. The term "housing" may refer to a protective enclosure that contains and supports the internal components of a motor apparatus. This can be made from materials such as metal, plastic, or composite materials, and can vary in shape and size depending on the application. In miniature applications, for instance, the housing may be characterized by a diameter no greater than 16mm or square no greater than 16x16mm. In various embodiments, housing 105 includes a first opening 106 positioned on a first side. The term "opening" may refer to an aperture, slot, or hole in the housing that allows for the extension or passage of internal components. The opening can be of any shape, such as circular, rectangular, or irregular, depending on the implementation.

In various implementations, motor apparatus 100 includes motor 101, which may be positioned inside housing 105. The term "motor" may refer to a device that converts electrical energy into mechanical motion. Motors may include a stator (e.g., stationary component) containing permanent magnets or electromagnets, and a rotor (e.g., rotating component) with windings that generate a magnetic field when energized. Motors may vary in size and power and can operate at high speeds, ranging from as low as near static or micro-movement to over 30,000 rpm, depending on the application.

In some implementations, motor 101 includes shaft 104. For instance, the term "shaft" may refer to a rotating component that transmits mechanical power from the motor to other parts of the apparatus. In some examples, shaft 104 may include a first portion extending through the first opening 106. This configuration allows for efficient transmission of rotational motion outside the housing, providing flexibility in connecting motor 101 to external components, such as gears or additional sensors. By extending shaft 104 through housing 105, motor apparatus 100 can drive external loads, enhancing its utility in various applications.

In various implementations, motor apparatus 100 includes code wheel 102. For example, the term "code wheel" may refer to a component that is attached to the motor shaft and contains markings or codes that can be read by the encoder to determine the position, speed, or direction of the shaft. Code wheel 102 may be configured in various shapes and sizes, such as circular, polygonal, elliptical, or linear, with optical or magnetic markings for accumulative or incremental encoding. In some examples, code wheel 102 may include a code region. The term "code region" may refer to a part of the code wheel that contains readable markings or codes, which may be used to generate precise feedback on the rotational position of the motor shaft. The code wheel operates by passing its coded region through an encoder, which reads the markings and converts them into electrical signals that provide real-time feedback on the motor's position, speed, or direction.

In some embodiments, motor apparatus 100 includes encoder 103. For instance, the term "encoder" may refer to a device that converts the mechanical motion of the motor into electrical signals, which are then used for feedback and control purposes. Encoder 103 may include optical, magnetic, or other types of encoders designed for both accumulative and incremental marking. In various examples, encoder 103 is positioned inside housing 105 and is designed to be slightly narrower in diameter (e.g., 1-2mm less) than motor 101, allowing it to fit within the compact space provided by housing 105. In some cases, encoder 103 may be positioned between the first side and code wheel 102.

To accommodate the need for compactness in miniature applications, encoder 103 may utilize a through-hole configuration. The term "through hole" may refer to an aperture in the encoder that allows the shaft to pass through. For instance, encoder 103 includes a second opening 107. The first portion of shaft 104 may extend through the second opening 107. In certain implementations, housing 105 may further include a third opening 108 positioned on a second side, which may be opposite relative to the first side. Shaft 104 may include a second portion extending through the third opening 108. In other words, shaft 104 may extend through both sides of housing 105, allowing for the attachment of external components on either end of the shaft. This dual-sided functionality can be particularly beneficial in applications where the motor needs to drive multiple mechanisms simultaneously or where space constraints demand a compact and integrated design. It provides great flexibility in mounting and integrating the motor into various systems, enhancing the overall versatility and applicability of the motor apparatus in a wide range of miniature and precision-driven applications. Additionally, the dual-sided functionality allows for load coupled to the opposite ends of shaft 104 to be synchronized when rotating.

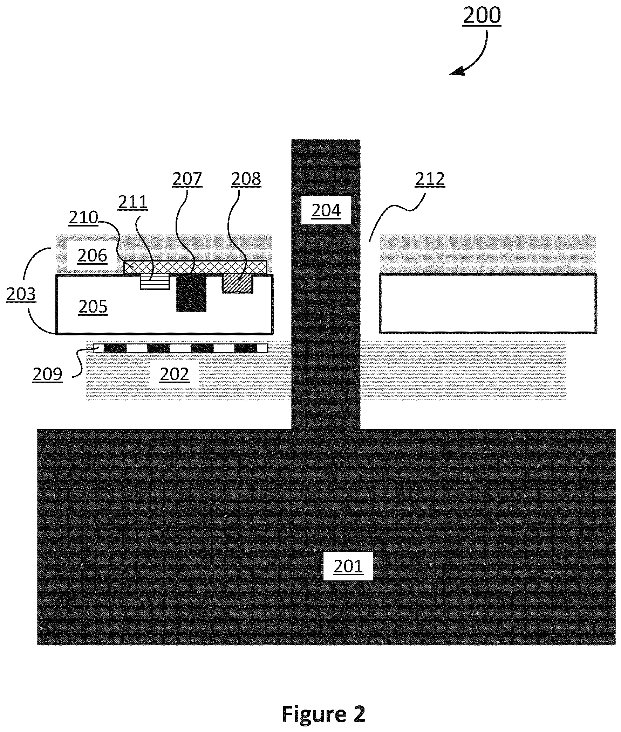

Figure 2 is a simplified diagram illustrating a motor apparatus 200 according to embodiments of the subject technology. This diagram merely provides an example, which should not unduly limit the scope of the claims. One of ordinary skill in the art would recognize many variations, alternatives, and modifications. As shown, motor apparatus 200 includes motor 201, code wheel 202, encoder 203, and/or the like. In some implementations, motor apparatus 200 may be positioned inside a housing (e.g., housing 105 of Figure 1).

In some embodiments, motor 201 includes shaft 204, which serves as the rotational component of the motor. Shaft 204 may extend from motor 201 and provide a means to transfer rotational motion to other components. It plays an important role in transmitting torque and enabling precise movement. For instance, shaft 204 might rotate at any speed ranging as low as near to static (e.g., micro movement) rpm to over 30,000 rpm, allowing motor 201 to drive various mechanical systems effectively.

In certain implementations, code wheel 202 may be coupled to shaft 204. For instance, code wheel 202 may be mounted on shaft 204 through various techniques, such as press-fitting, adhesive bonding, mechanical fastening, and/or the like. Code wheel 202 may include code region 209, which may consist of patterns that vary depending on the type of code wheel used. For example, code region 209 may include optical patterns for light-based detection or magnetic zones for magnetic detection. The operation of code wheel 202 involves translating rotational movement into a readable pattern of light and dark areas or magnetic fields, which can be used to determine the motor's position, speed, or direction. In miniature applications, it is desirable for the code wheel to be lightweight and have a small diameter to reduce the moment of inertia. This reduction in inertia is beneficial for applications requiring quick response times and accurate positioning, such as medical devices or micro-robotics.

In various embodiments, code wheel 202 may be implemented in conjunction with encoder 203, which detects the patterns on the code wheel and converts them into electronic signals. Encoder 203 may include a first layer 205 and a second layer 206. For example, the term "layer" may refer to a distinct functional unit or level of material that forms part of the encoder's structure. Each layer may serve various functions and can be composed of different materials, depending on the implementation. In some examples, first layer 205 is positioned between second layer 206 and code wheel 202. First layer 205 may include light source 208. The term "light source" may refer to a device or component capable of emitting light, which may include, without limitation, LEDs, laser diodes, photocathodes, light bulbs, or other optical emitters. Light source 208 may be configured to project light to code region 209.

According to some embodiments, second layer 206 may include circuit 210. The term "circuit" may refer to an assembly of electronic components configured to perform specific functions, such as processing, transmitting, or receiving electrical signals. Circuit 210 may include, without limitation, an integrated circuit (IC), a printed circuit board (PCB), a lead frame, a flexible circuit, or a micro-interconnecting device (MID).

In some examples, circuit 210 may include sensor 211. The term "sensor" may refer to a device or component that detects and responds to physical stimuli (e.g., light, temperature, motion, pressure, or magnetic fields), converting these stimuli into electrical signals. Examples of sensor 211 may include, without limitation, photodiodes, photocathodes, photomultipliers, or other light-sensitive devices. Sensor 211 detects the light patterns and outputs signals corresponding to the code wheel's position and movement. In certain embodiments, circuit 210 may include a processor configured to calculate a rotation of motor 201 based on an output of sensor 211. The term "processor" may refer to a component or integrated circuit that performs computational tasks and processes data. For example, the processor may include, without limitation, a microcontroller, a digital signal processor (DSP), a field-programmable gate array (FPGA), an application-specific integrated circuit (ASIC), and/or the like.

Depending on the implementation, first layer 205 may further include block 207, which may be positioned between light source 208 and sensor 211. The term "block" refers to a component or structure within the encoder designed to obstruct, filter, or manage the flow of light. Block 207 functions to control the pathways through which light or other signals travel, ensuring that only the desired interactions occur between light source 208, code wheel 202, and sensor 211. It enhances the contrast and accuracy of the light signals, contributing to precise detection and accurate signal processing within the encoder.

In various implementations, first layer 205 may include a material coupled to second layer 206. This material may be characterized by a transmittance of at least 50%, allowing sufficient light to pass through and interact with code region 209. As some non-limiting examples, the material may include epoxy, silicone, phosphor, an amorphous polyamide resin or fluorocarbon, glass, plastic, or combinations thereof. In some embodiments, the material may be configured to cover light source 208 and/or sensor 211, protecting them from environmental hazards such as moisture, debris, or physical impacts. The material can be any transmissive and moldable substance capable of collimating emitted light into a parallel beam directed from light source 208 to code region 209 and concentrating the reflected light into a beam directed at sensor 211. Depending on the implementation, an outer surface of first layer 205 may be substantially flat between the area above light source 208 and the area above sensor 211. In other examples, the outer surface of first layer 205 may have one or more curved features for shaping light as it travels from light source 208 to sensor 211.

As previously noted, encoder 203 may utilize a through-hole configuration. For instance, encoder 203 may include opening 212, which allows shaft 204 to pass through encoder 203, making it possible to utilize both sides of motor apparatus 200. The formation of opening 212 may be achieved through various manufacturing techniques, such as laser cutting, mechanical drilling, chemical etching, and/or the like. By accommodating the shaft's extension through both sides, motor apparatus 200 can balance load distribution more effectively and reduce stress on the shaft and bearings, potentially increasing the longevity and reliability of the apparatus. Depending on the implementations, a minimum clearance (e.g., greater than or equal to 0.5mm) may be maintained around shaft 204 to prevent any mechanical interference between the shaft and the encoder, ensuring smooth operation and minimizing wear.

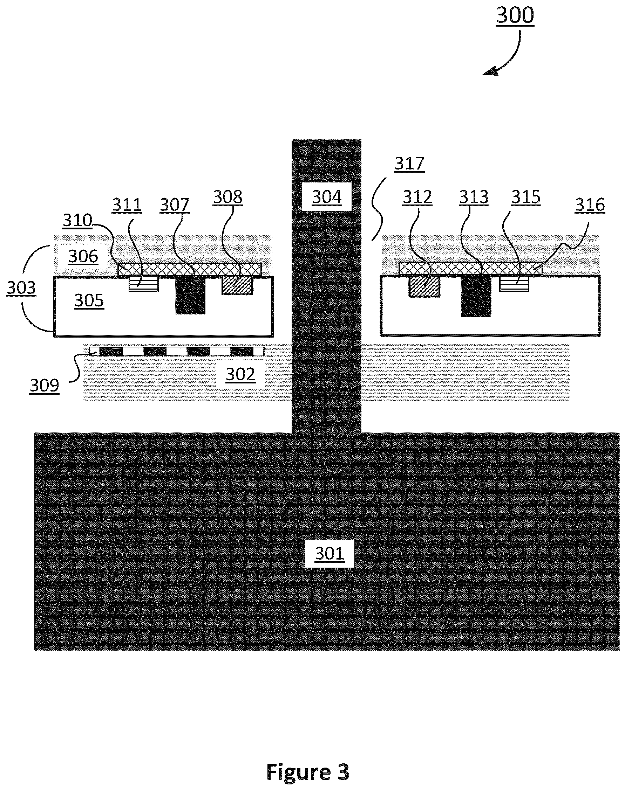

Figure 3 is a simplified diagram illustrating a motor apparatus 300 according to embodiments of the subject technology. This diagram merely provides an example, which should not unduly limit the scope of the claims. One of ordinary skill in the art would recognize many variations, alternatives, and modifications. As shown, motor apparatus 300 may include motor 301, code wheel 302, encoder 303, and/or the like. In some implementations, motor apparatus 300 may be positioned inside a housing (e.g., housing 105 of Figure 1). Similar to motor apparatus 200 of Figure 2, motor 301 includes shaft 304, which may be coupled to code wheel 302. Code wheel 302 may include code region 309, which may consist of patterns that vary depending on the type of code wheel used. Encoder 303 may include a first layer 305 and a second layer 306. First layer 305 may be positioned between second layer 306 and code wheel 302.

In various implementations, first layer 305 may include a first light source 308 and a second light source 312. It is to be appreciated that the encoder may include more than two light sources, depending on the specific requirements of the implementation. Second layer 306 may include a first circuit 310 and a second circuit 316. First light source 308 may be coupled to first circuit 310 and second light source 312 may be coupled to second circuit 316. First circuit 310 may include first sensor 311. Second circuit 316 may include second sensor 315. Depending on the implementation, first layer 305 may include a first block 307 positioned between first light source 308 and first sensor 311. First layer 305 may further include a second block 313 positioned between second light source 312 and second sensor 315. These blocks function as optical barriers or filters, managing the pathways through which light travels from the light sources to the sensors. In some cases, encoder 303 further includes opening 317. A first portion of shaft 304 may extend through opening 317.

As shown in Figure 3, first light source 308 and second light source 312 may be positioned on opposite sides of shaft 304. This configuration can eliminate optical crosstalk, which is the unwanted interference between light signals intended for different sensors. By having the light sources and their corresponding sensors separated by shaft 304 and positioned in distinct regions, the system ensures that the light emitted from one source does not inadvertently reach the other sensor. Additionally, the use of dual light sources and dual sensors allows for redundancy and enhances the resolution of encoder 303. With two independent light detection paths, the system can achieve higher precision in detecting the rotational position, speed, and direction of code wheel 302, which is beneficial in applications requiring high accuracy and reliability, such as in medical devices, precision robotics, and other miniature applications.

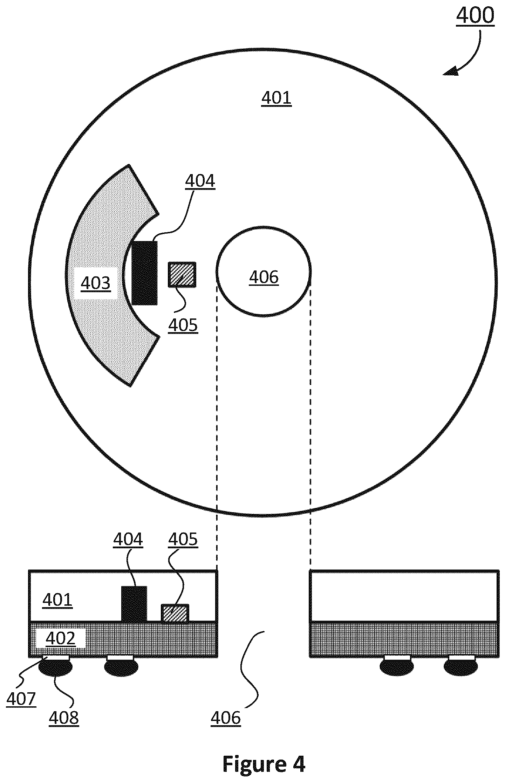

Figure 4 is a simplified diagram illustrating a top view and a cross-sectional view of an encoder 400 according to embodiments of the subject technology. This diagram merely provides an example, which should not unduly limit the scope of the claims. One of ordinary skill in the art would recognize many variations, alternatives, and modifications.

In various embodiments, encoder 400 may be implemented as an optical encoder. As an example, encoder 400 may include first layer 401 and second layer 402. First layer 401 may include light source 405 and block 404. Second layer 402 may include a circuit (not shown) coupled to light source 405. As some non-limiting examples, the circuit may include, without limitation, an IC, a PCB, a lead frame, a flexible circuit, or a micro-interconnecting device. The circuit may include sensor 403, which may detect the light patterns projected by light source 405 and reflected or transmitted by a code wheel (not shown).

In some embodiments, second layer 402 may further include contact 407 configured to couple to ball grid array (BGA) 408. The term "contact" may refer to an electrical connection point that facilitates the transmission of signals between different components or layers of the encoder. Contact 407 may be made from various conductive materials and may be implemented in different forms, such as pads, pins, or traces. The term "ball grid array" may refer to a type of surface-mount packaging used for integrated circuits, characterized by an array of solder balls on the underside of the device that provide electrical connectivity. BGA 408 ensures robust and reliable electrical connections between encoder 400 and other components or systems, allowing for efficient signal transmission and processing.

In certain implementations, encoder 400 further includes through hole 406, which allows a motor shaft to pass through encoder 400. This through-hole configuration enables the use of both sides of the motor apparatus, allowing for balanced load distribution and reduced mechanical stress on the shaft and bearings. The formation of through hole 406 can be achieved through various manufacturing techniques, such as laser cutting, mechanical drilling, or chemical etching.

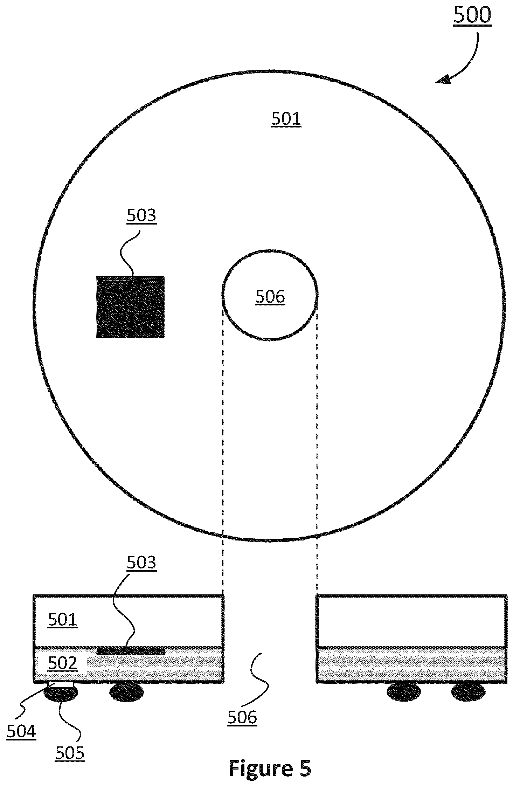

Figure 5 is a simplified diagram illustrating a top view and a cross-sectional view of an encoder 500 according to embodiments of the subject technology. This diagram merely provides an example, which should not unduly limit the scope of the claims. One of ordinary skill in the art would recognize many variations, alternatives, and modifications.

In various embodiments, encoder 500 may be implemented as a magnetic encoder, which operates by detecting changes in the magnetic field as the code wheel rotates, converting these changes into electrical signals that correspond to the position, speed, or direction of the motor. For instance, encoder 500 may include first layer 501 and second layer 502. Second layer 502 may include a circuit (not shown), which includes a first magnetic sensor 503. The term "magnetic sensor 503" may refer to a device capable of detecting magnetic fields and converting them into electrical signals. For example, first magnetic sensor 503 may include a Hall effect sensor or other types of magnetosensitive sensors. The term "Hall effect sensor" may refer to a sensor that detects the presence and magnitude of a magnetic field using the Hall effect. The Hall effect occurs when a conductor carrying electrical current is introduced into a magnetic field, consequently generating an output voltage (e.g., a Hall voltage) proportional to the strength of the magnetic field.

In some examples, the circuit may further include a second magnetic sensor. The second magnetic sensor can enhance the accuracy and reliability of encoder 500 by providing additional data points, which can be used to eliminate errors and improve the resolution of the position and speed measurements. These sensors work together to detect the magnetic patterns on the code wheel, converting these patterns into electronic signals that can be processed to determine the motor's operational parameters.

In some embodiments, second layer 502 may include contact 504, configured to couple with BGA 505, which facilitates electrical connections and signal transmission between encoder 500 and other components in the system. In certain examples, encoder 500 includes a through hole 506, allowing a motor shaft to pass through encoder 500, enabling the use of both ends of the shaft for connecting to different mechanical components or loads.

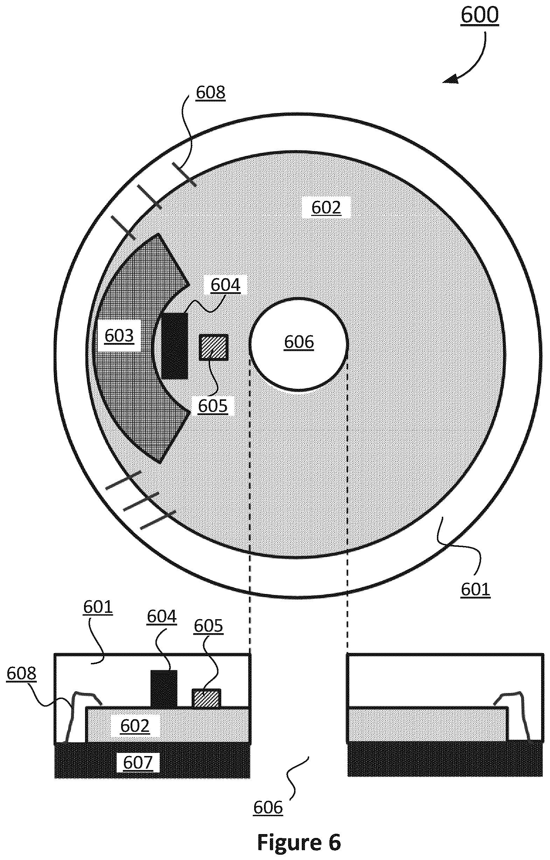

Figure 6 is a simplified diagram illustrating a top view and a cross-sectional view of an encoder 600 according to embodiments of the subject technology. This diagram merely provides an example, which should not unduly limit the scope of the claims. One of ordinary skill in the art would recognize many variations, alternatives, and modifications.

In various embodiments, encoder 600 may be implemented as an optical encoder. As an example, encoder 600 may include first layer 601 and second layer 602. First layer 601 may include light source 605 and block 604. Second layer 602 may include a circuit (not shown) coupled to light source 605. The circuit may include sensor 603, which may detect the light patterns projected by light source 605 and reflected or transmitted by a code wheel (not shown).

In some implementations, encoder 600 may further include substrate 607 coupled to second layer 602. The term "substrate" may refer to a base material upon which circuits and other components are built or attached. Substrate 607 may be made from a variety of materials such as silicon, ceramic, glass, plastic, and/or the like. Substrate 607 provides mechanical support and electrical pathways for the components of encoder 600. It ensures the stable placement and operation of the electronic components, facilitating their integration into the overall motor system.

In certain examples, encoder 600 further includes wire 608 coupled to the circuit and substrate 607. The term "wire" may refer to a conductive material used to transmit electrical signals or power between components. Wire 608 may include, without limitation, copper wires, aluminum wires, or other conductive traces. Wire 608 facilitates electrical connections between the circuit on second layer 602 and external components, enabling the transmission of sensor data and control signals. In various examples, encoder 600 includes a through hole 606, allowing a motor shaft to pass through encoder 600, enabling the use of both ends of the shaft for connecting to different mechanical components or loads.

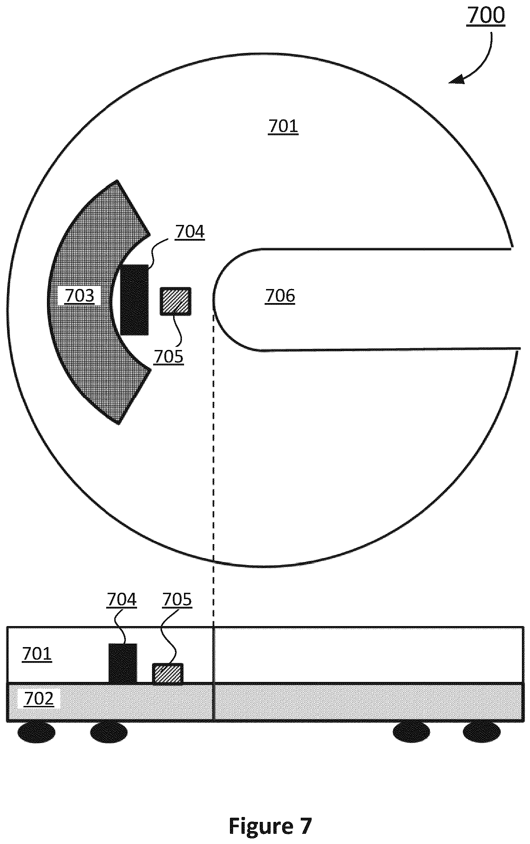

Figure 7 is a simplified diagram illustrating a top view and a cross-sectional view of an encoder 700 according to embodiments of the subject technology. This diagram merely provides an example, which should not unduly limit the scope of the claims. One of ordinary skill in the art would recognize many variations, alternatives, and modifications.

In various embodiments, encoder 700 may be implemented as an optical encoder. As an example, encoder 700 may include first layer 701 and second layer 702. First layer 701 may include light source 705 and block 704. Second layer 702 may include a circuit (not shown) coupled to light source 705. The circuit may include sensor 703, which may detect the light patterns projected by light source 705 and reflected or transmitted by a code wheel (not shown).

In certain implementations, encoder 700 further includes through hole 706, which allows a motor shaft to pass through encoder 700. Depending on the design requirements, through hole 706 may be configured in various shapes and sizes such as circular, rectangular, square, triangular, oval, irregular, and/or the like. These configurations can be adjusted to conform to specific design constraints or to integrate with the motor housing. For instance, as shown in Figure 7, through hole 706 may be configured as an open cut, extending from the center towards the periphery of the encoder, creating a C-shape or horseshoe shape. This allows for easy assembly and alignment of the motor shaft with the encoder. Additionally, some embodiments may feature multiple through holes to accommodate various structures extending through the encoder, such as additional support shafts or alignment guides.

Depending on the implementation, the position of through hole 706 may vary. For example, through hole 706 may be centrally located within the encoder, aligning directly with the center of the motor shaft to provide balanced rotational symmetry. In other examples, through hole 706 may be offset to accommodate different structural or functional requirements. This offset positioning may be beneficial in designs where the encoder needs to avoid interference with other components or where space constraints dictate a non-central shaft location.

While the above is a full description of the specific embodiments, various modifications, alternative constructions and equivalents may be used. Therefore, the above description and illustrations should not be taken as limiting the scope of the subject technology which is defined by the appended claims.

## Claims

1. A motor apparatus comprising:
a housing comprising a first opening positioned on a first side, the housing being **characterized by** a diameter no greater than 16mm;
a motor comprising a shaft and positioned inside the housing, the shaft comprising a first portion extending through the first opening;
a code wheel coupled to the shaft and positioned inside the housing, the code wheel comprising a code region; and
an encoder comprising a second opening, the first portion of the shaft extending through the second opening, the encoder further comprising a first layer and second layer, the encoder being positioned between the first side and the code wheel, the first layer being positioned between the second layer and the code wheel, the first layer comprising a light source, the second layer comprising a circuit, the light source being coupled to the circuit.

2. The motor apparatus of claim 1, wherein:
the housing comprising a third opening positioned on a second side;
the second side is opposite relative to the first side; and
the shaft comprises a second portion extending through the third opening.

3. The motor apparatus of claim 1 or 2, wherein the circuit further comprises a sensor,
in particular, wherein the circuit further comprises a processor configured to calculate a rotation of the motor based on an output of the sensor.

4. The motor apparatus of any of the preceding claims, wherein the encoder further comprises a substrate coupled to the second layer,
in particular, wherein the encoder further comprises a wire coupled to the circuit and the substrate.

5. The motor apparatus of any of the preceding claims, wherein the second layer comprises a contact coupled to a ball grid array.

6. The motor apparatus of any of the preceding claims, wherein the light source is configured to project light to the code region of the code wheel.

7. A motor apparatus comprising:
a housing comprising a first opening positioned on a first side, the housing being **characterized by** a diameter no greater than 16mm;
a motor comprising a shaft and positioned inside the housing, the shaft comprising a first portion extending through the first opening;
a code wheel coupled to the shaft and positioned inside the housing; and
an encoder comprising a second opening, the first portion of the shaft extending through the second opening, the encoder further comprising a first layer and second layer, the encoder being positioned between the first side and the code wheel, the first layer being positioned between the second layer and the code wheel, the second layer comprising a first light source and a second light source, the second layer comprising a circuit coupled to the first light source and the second light source, the circuit comprising a first sensor and a second sensor.

8. The motor apparatus of claim 7, wherein the first layer further comprises a first block and a second block, the first block is positioned between the first light source and the first sensor, the second block is positioned between the second light source and the second sensor.

9. The motor apparatus of claim 7 or 8, wherein the first sensor comprises a photodiode.

10. The motor apparatus of any of the preceding claims, wherein the first layer comprises a material coupled to the second layer, the material is **characterized by** a transmittance of at least 50%.

11. A motor apparatus comprising:
a housing comprising a first opening positioned on a first side, the housing being **characterized by** a diameter no greater than 16mm;
a motor comprising a shaft and positioned inside the housing, the shaft comprising a first portion extending through the first opening;
a code wheel coupled to the shaft and positioned inside the housing; and
an encoder comprising a second opening, the first portion of the shaft extending through the second opening, the encoder further comprising a first layer and second layer, the encoder being positioned between the first side and the code wheel, the first layer being positioned between the second layer and the code wheel, the second layer comprising a first circuit, the first circuit comprising a first magnetic sensor.

12. The motor apparatus of claim 11, wherein the first magnetic sensor comprises a Hall effect sensor, and/or
wherein the code wheel comprises a code region.

13. The motor apparatus of claim 11 or 12, wherein the first circuit further comprises a second magnetic sensor, and/or
wherein the first circuit further comprises a processor configured to calculate a rotation of the motor based on an output of the first magnetic sensor.

14. The motor apparatus of claim 11 or 12, wherein the second layer further comprises a second circuit, the second circuit comprises a second magnetic sensor.

15. The motor apparatus of any of claims 11 to 14, wherein the first layer comprises a material coupled to the second layer.
